# FASCICULE DE BREVET EUROPEEN

(11) **EP 0 688 124 B1**
(45) Date de publication et mention de la délivrance du brevet: **13.11.2002**
(21) Numéro de dépôt: 95401400.7
(22) Date de dépôt: 15.06.1995
(51) Int. Cl.: H04L 29/06

(54) **Procédé de partage de ressources physiques et dispositif d'interface pour la mise en oeuvre du procédé**
Verfahren und Schnittstelle zur anteiligen Nutzung von physischen Betriebsmitteln
Method and interface for sharing physical resources

(30) Priorité: 17.06.1994 FR 9407437
(43) Date de publication de la demande: 20.12.1995
(73) Titulaire: ALCATEL, 75008 Paris (FR)
(72) Inventeur: Martin, Jean-Noel, F-35160 Montfort (FR); Barrandon, Anthony, F-35580 Guichen (FR); Schiano, Serge, F-78000 Versailles (FR)
(74) Mandataire: El Manouni, Josiane

(56) Documents cités:
- AHO, ALFRED V. ET AL. 'Principles of Compiler Design' 1977 , ADDISON-WESLEY PUBLISHING COMPANY , READING, MASSACHUSETTS * page 308, alinéa 8.4 - page 311 *
- COMMUNICATIONS OF THE ACM, vol. 35, no. 7, Juillet 1992 NEW YORK, US, pages 77-98, XP 000331522 SINHA, ALOK 'Client-Server computing'

## Description

La présente invention concerne de manière générale des architectures informatiques de type client-serveur. Dans de telles architectures, un premier moyen de traitement, dit serveur, est connecté à des ressources physiques, pouvant consister à titre d'exemple en une unité de commande électrique ou une unité de mesure, qui sont mis à la disposition d'un ou plusieurs seconds moyens de traitement, dits clients, non connectés directement à de telles ressources.

Plus précisément, l'invention concerne le partage entre un premier moyen de traitement et un ou plusieurs seconds moyens de traitement de ressources physiques associées audit premier moyen de traitement. A des fins de simplification dans la suite de la description, il est supposé qu'un unique second moyen de traitement partage des ressources physiques avec un premier moyen de traitement auquel lesdites ressources sont associées.

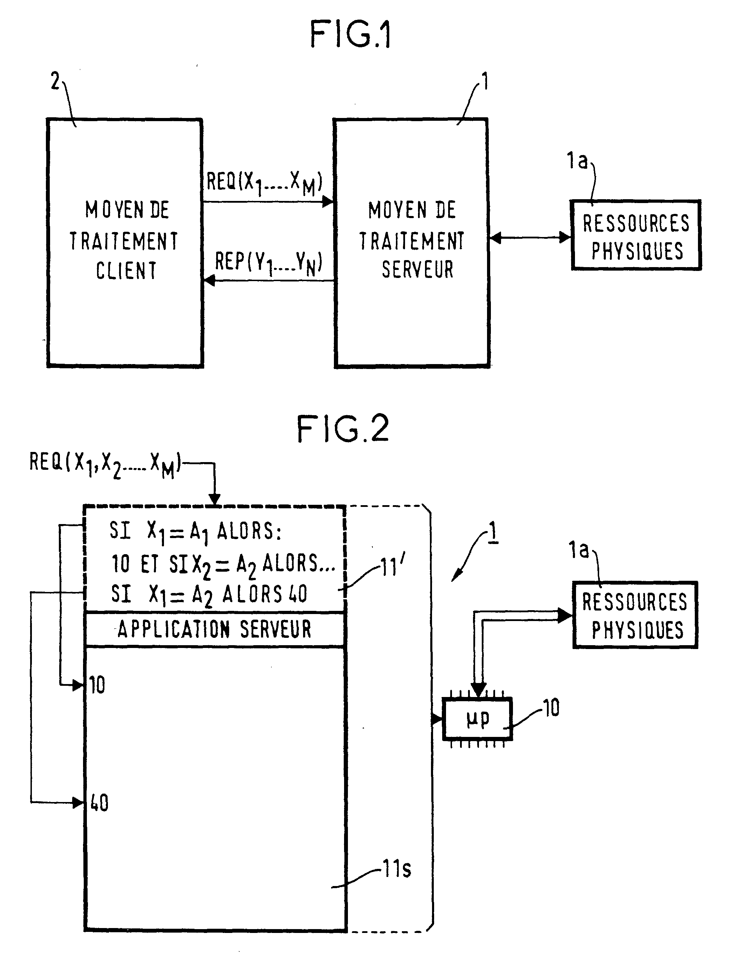

Dans la figure 1, les premier et second moyens de traitement 1 et 2 sont représentés sous forme très schématique bien qu'ils puissent consister selon un exemple de réalisation tous deux en des ordinateurs.

Le premier moyen de traitement 1 est seul associé à des ressources physiques la qui ne sont pas directement accessibles par le second moyen de traitement 2. Pour solliciter un accès aux ressources physiques la associées au premier moyen de traitement 1, le second moyen de traitement 2 transmet un message de demande d'accès auxdites ressources REQ(X₁,...,X_{M}) à destination du premier moyen de traitement 1. Ce message de demande d'accès REQ(x₁,...,x_{M}) inclut M informations X₁,...,X_{M} définissant la nature de l'accès aux ressources requis. En réponse à ce message reçu et après avoir accédé, à travers des moyens d'interface, aux ressources physiques 1a, le premier moyen de traitement 1 transmet un message de réponse REP(y₁,...,y_{N}) à destination du second moyen de traitement 2. Ce message de réponse inclut des informations relatives au(x) résultat(s) de la demande d'accès aux ressources la transmise par le second moyen de traitement 2 à travers le premier moyen de traitement 1.

Pour fixer les idées et relativement à l'exemple selon lequel les ressources physiques la sont sous la forme d'une unité de commande électrique, il peut être supposé que le message REQ(x₁,...,x_{M}) consiste en un message de télécommande visant à activer un appareil électrique en fonction d'informations d'activation prédéterminées. Le message REP(y₁,...,y_{N}) contient alors une ou des informations numériques définissant le ou les résultats de l'action de télécommande qui sont fournis par l'unité de commande électrique 1a.

Il apparaîtra de manière évidente que, selon la nature de l'accès aux ressources la, les nombres respectifs M et N d'informations (x₁,...,x_{M}) et (y₁,...,y_{N}) transmises dans les messages de demande REQ(x₁,...,x_{M}) et de réponse REP(y₁,...,y_{N}) peuvent être quelconques.

Une telle architecture client-serveur est décrite dans l'article de A.SINHA intitulé "Client-Server computing" publié le 07.07.1992 dans "Communications of the ACM", vol.35, pages 77-98, New-York, US.

Comme montré dans la figure 2, le premier moyen de traitement 1 est typiquement sous la forme d'un processeur ou microprocesseur, désigné dans la suite de la description par "circuit de traitement", 10 et d'un programme logiciel 11s coopérant tous deux ensemble pour actionner, contrôler les ressources physiques sous la forme d'une unité de commande 1a, et échanger des données avec celle-ci. Le programme ils régissant le fonctionnement du microprocesseur 10 peut être divisé en des sous-programmes, ou tâches élémentaires, distinctes activant le microprocesseur 10 pour fournir des fonctions respectives particulières relatives à la commande et au contrôle des ressources physiques 1a.

Selon la technique antérieure, dès lors qu'il est souhaité rendre accessible des ressources physiques la à un moyen de traitement client 2, il est nécessaire de modifier le programme source 11s interfaçant le premier moyen de traitement 1 avec les ressources physiques 1a de telle sorte que le moyen 1 accepte des messages de demande d'accès aux ressources REQ(x₁,...,x_{M}) provenant du système de traitement client 2. La modification du programme 11s, dans sa forme de programme source en langage évolué, consiste initialement à définir tous les types de messages de demande d'accès aux ressources pouvant solliciter le premier moyen de traitement 1 pour un accès aux ressources physiques 1a. Une fois tous les types de messages de demande d'accès étant définis, il est ensuite nécessaire d'introduire, comme montré à la figure 2 dans le bloc 11' en trait discontinu, sous forme de langage informatique toutes les alternatives "SI-ALORS" d'accès aux ressources physiques en fonction des valeurs prises par les informations x₁,...,x_{M} contenues dans les messages REQ(x₁,...,x_{M}). Ces alternatives définissent en outre des sauts de programme à des adresses de programme prédéfinies, comme montrées par les flèches à gauche dans la figure 2.

Cette solution fournie par la technique antérieure présente deux inconvénients principaux.

D'une part, elle nécessite une reprogrammation systématique du programme dans le moyen de traitement serveur 1 dès lors que des nouveaux types d'accès, ou utilisations des ressources physiques, sont définis. D'autre part, elle a pour résultat d'augmenter très sensiblement la taille du programme 11s, après compilation, par adjonction de la portion de programme additionnelle 11'.

L'invention vise à remédier aux inconvénients précités en fournissant un procédé ne nécessitant aucune modification du programme gérant, en coopération avec le microprocesseur, les ressources physiques dans le moyen de traitement serveur pour un partage desdites ressources avec un moyen de traitement client. Un dispositif d'interface pour la mise en oeuvre du procédé est également prévu.

A cette fin, un procédé pour partager des ressources physiques entre un premier moyen de traitement et un second moyen de traitement, lesdites ressources étant associées audit premier moyen de traitement, ledit procédé comprenant la transmission par ledit second moyen de traitement d'un message de demande d'accès auxdites ressources à destination du premier moyen de traitement, et ledit premier moyen de traitement comprenant un circuit de traitement associé à une mémoire de programme et une mémoire de données,
est caractérisé en ce qu'il comprend les étapes de :
- association à une valeur prise par une première information contenue dans un premier champ dudit message de demande d'accès, d'une adresse associée respective désignant un emplacement donné dans la mémoire de programme et identifiant le début d'une tâche parmi une pluralité de tâches destinées à accéder auxdites ressources physiques,
- écriture de valeurs respectives prises par ou associées à des secondes informations qui sont contenues dans un second champ dudit message de demande d'accès, à des premiers emplacements prédéterminés dans la mémoire de données associée audit premier moyen de traitement, lesdits premiers emplacements prédéterminés étant tels que la tâche accède à chacun desdits premiers emplacements prédéterminés lors de son exécution,
- chargement de ladite adresse associée dans un registre d'exécution dudit circuit de traitement inclus dans le premier moyen de traitement, afin de déclencher ladite tâche,
lesdites étapes étant mises en oeuvre par un dispositif d'interface, et un programme utile au fonctionnement dudit dispositif d'interface étant dissocié de chacune de ladite pluralité de tâches.

Pour une variante selon laquelle des résultats d'exécution sont fournis par la tâche, il est prévu en outre l'étape de
- lecture par ledit dispositif d'interface d'informations résultant de l'exécution de ladite tâche par ledit circuit de traitement et mémorisées à des seconds emplacements prédéterminés dans ladite mémoire de données associée audit premier moyen de traitement, pour former un message de réponse transmis à destination dudit second moyen de traitement,
ladite étape de lecture étant mise en oeuvre par le dispositif d'interface en réponse à la fin de l'exécution de ladite tâche.

Dans un environnement multitâche, les premier et second moyens de traitement sont tous deux associés à un même circuit de traitement.

Typiquement, le dispositif d'interface résulte de l'exécution dudit programme par ledit circuit de traitement associé audit premier moyen de traitement.

L'invention fournit également un dispositif d'interface pour la mise en oeuvre du procédé. Le dispositif reçoit ledit message de demande d'accès en provenance du second moyen de traitement et coopère avec ledit premier moyen de traitement. il est caractérisé en ce qu'il comprend:
- un moyen de table de correspondance pour associer à chacune de valeurs pouvant être prise par ladite première information, l'une respective d'une pluralité d'adresses désignant des emplacements respectifs dans la mémoire de programme,
- un moyen pour successivement adresser chacun desdits premiers emplacements prédéterminés dans la mémoire de données et écrire en correspondance chacune desdites secondes valeurs respectives prises par les secondes informations contenues dans le second champ dudit message de demande d'accès.

D'autres caractéristiques et avantages de la présente invention apparaîtront plus clairement à la lecture de la description suivante en référence aux dessins annexés correspondants dans lesquels :
- la figure 1, déjà commentée, montre sous forme très schématique deux moyens de traitement appartenant à une architecture de type client-serveur;
- la figure 2, également déjà commentée, montre avec plus de détail un moyen de traitement serveur dans l'architecture de la figure 1; et
- la figure 3 schématise fonctionnellement des étapes utiles à la mise en oeuvre du procédé selon l'invention.

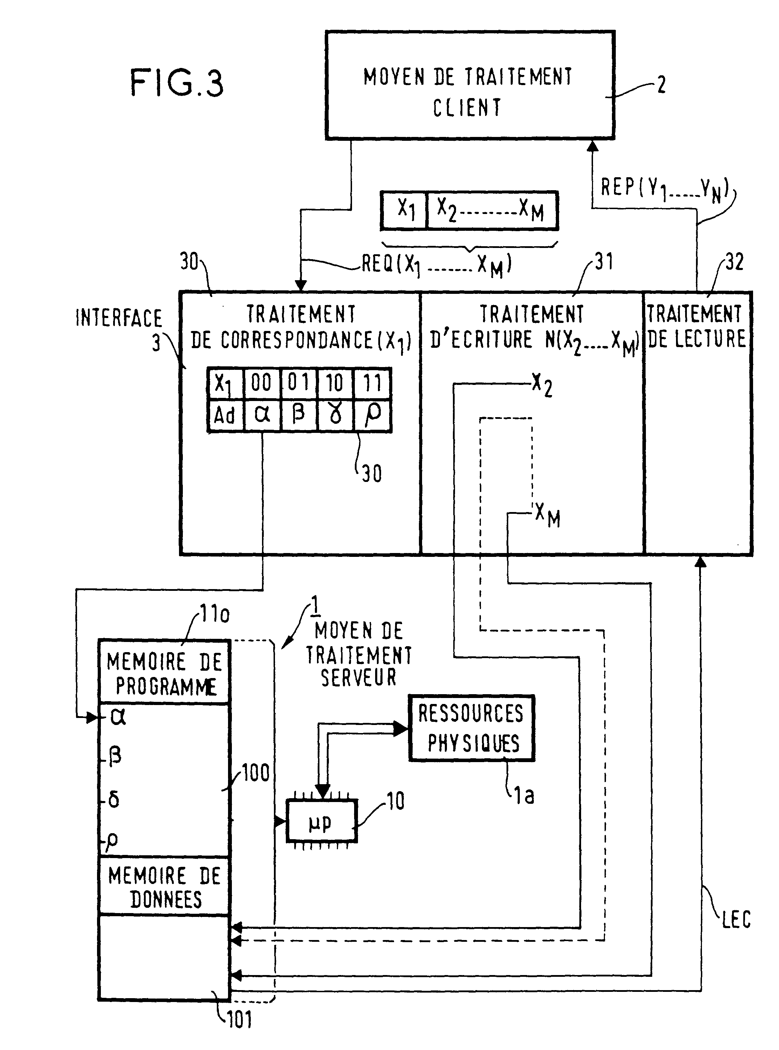

En référence à la figure 3, les moyens utiles à la mise en oeuvre de l'invention sont constitués d'un moyen de traitement serveur, ou premier moyen de traitement, 1, d'un moyen de traitement client, ou second moyen de traitement, 2 et d'un dispositif d'interface 3. Ce dispositif d'interface 3 est sous la forme d'un programme informatique coopérant avec un processeur ou microprocesseur. Le programme informatique formant partie du dispositif d'interface 3 est dissocié des programmes, ou tâches, qui sont implémentés dans le premier moyen de traitement 1 et qui gèrent les accès aux ressources physiques connectées au premier moyen de traitement 1. Le dispositif 3 est destiné, en outre, à recevoir chacun de messages de demande d'accès aux ressources REQ(x₁,...,x_{M}) qui est transmis par le second moyen de traitement 2, traiter ce message reçu en coopération avec le premier moyen de traitement 1 dans l'objectif d'accéder aux ressources physiques associées à ce dernier, et retransmettre les résultats de cet accès aux ressources physiques la vers ledit second moyen de traitement 2. Il peut être prévu un programme d'enchaînement du traitement des messages de demande d'accès à travers lequel chaque message de demande d'accès est reçu par le dispositif d'interface 3. Ce programme d'enchaînement est destiné à communiquer avec le second moyen de traitement pour recevoir des messages de demande d'accès transmis par ce dernier, et enregistrer ces messages. Ces messages ainsi enregistrés sont ensuite transmis au dispositif d'interface décrit ci-dessous. Le dispositif d'interface 3 peut être mis sous la forme d'une table de correspondance 30, un moyen d'écriture 31 et un moyen de lecture 32.

Dans une première étape du procédé selon l'invention, le deuxième moyen de traitement 2 transmet un message de demande d'accès aux ressources REQ (X₁,...,X_{M}). Ce message peut être conceptuellement séparé en deux champs de données distincts constitués respectivement de l'information x₁ et des informations X₂ à X_{M}. L'information X₁ dans un premier champ identifie une tâche particulière dans le programme compilé, ou objet, 11o de gestion des ressources physiques 1a. A titre indicatif, en supposant que les ressources physiques la sont sous la forme d'une unité de commande électrique, la tâche peut consister en l'une de tâches parmi une pluralité de tâches de commande d'un dispositif électrique connecté à l'unité de commande. Les informations X₂ à X_{M} dans un second champ définissent pour leur part des valeurs de paramètres respectifs nécessaires à l'exécution de ladite tâche.

Comme montré dans la figure 3, le premier moyen de traitement 1 gérant les ressources physiques la comprend un circuit de traitement, ou microprocesseur, 10 associé à deux mémoires 100 et 101 désignées par les termes respectifs de "mémoire de programme" et "mémoire de données". La mémoire de données est connue par l'homme du métier sous le terme de "pile" La mémoire de programme 100 mémorise le programme dans sa forme compilée qui gère les ressources physiques la et qui est exécutable par le processeur, ou microprocesseur, 10. Cette mémoire de programme 100 est subdivisée en une pluralité de zones-mémoire mémorisant des tâches respectives de gestion des ressources physiques 1a. Chacune de ces zones-mémoire est définie par un point d'entrée ou adresse de début de tâche. La mémoire de données 101 mémorise pour sa part des données utiles à l'exécution de chacune des tâches dudit programme. Le circuit de traitement 10 accède aux données mémorisées dans la mémoire 101 lors de l'exécution du programme mémorisé dans la mémoire de programme 100.

La mise en oeuvre du dispositif d'interface 3 dans le cadre de l'invention est telle que suit. Le message REQ(x₁,...,x_{M}) de demande d'accès aux ressources physiques la produit par le second moyen de traitement 2 est reçu par le dispositif d'interface 3, éventuellement à travers le programme d'enchaînement. L'information X₁ du premier champ est traitée à travers la table de correspondance 30 du dispositif d'interface 3 selon l'invention. Cette table de correspondance 30 associe à l'information X₁ une adresse, ou point d'entrée, désignant un emplacement de début de zone-mémoire donnée dans la mémoire de programme 100. Selon la figure 3, et ce à titre d'exemple, il est supposé que l'information X₁ prend l'une parmi quatre valeurs distinctes désignées en code binaire par OO, O1, 10, 11. Ces quatre valeurs sont respectivement associées par la table de correspondance 30 à quatre adresses dans la mémoire de programme 100 , dénotées α, β, δ et ρ. Ces quatre adresses désignent quatre points d'entrée de tâches élémentaires respectives constituant des traitements particuliers d'accès aux ressources physiques 1a.

Les informations X₂ à X_{M} du second champ du message de demande d'accès REQ(x₁,...,x_{M}) sont traitées par le moyen d'écriture 31. Ce moyen 31 adresse et écrit à des emplacements respectifs dans la mémoire de données 101 les valeurs respectives prises par les informations X₂ à X_{M}. Ces valeurs respectives des informations X₂ à X_{M} sont écrites à des emplacements prédéterminés dans la pile 101 qui correspondent à des emplacements auxquels une tâche,ultérieurement appelée, accède lors de son exécution. Il est à noter que les valeurs écrites dans la pile 101 peuvent ne pas correspondre directement aux valeurs prises par les informations X₂ à X_{M} . Dans ce cas, il est prévu un moyen pour associer à chacune de valeurs prises par une information X₂ à X_{M}, une valeur destinée à être mémorisée dans la pile. Après mémorisation dans la pile des valeurs prises par les informations X₂ à X_{M}, ou des valeurs asssociées auxdites valeurs prises, l'adresse produite par la table de correspondance, ici supposée être égale à α (X₁=00), est chargée dans un registre d'exécution du microprocesseur 10 qui exécute alors la tâche définie par les instructions mémorisées dans la zone-mémoire débutant à l'adresse α pour un accès aux ressources physiques 1a. Cette tâche utilise les valeurs préalablement écrites dans la pile 101.

En résultat de l'exécution de cette tâche par le microprocesseur 10 pour un accès aux ressources physiques 1a, l'/les information(s) résultant de cet accès sollicité par le moyen de traitement 2 sont mémorisés de manière conventionnelle dans la mémoire de données 101 à des emplacements prédéterminés, en fonction du programme. En outre, dès lors que la tâche exécutée par le microprocesseur 10 pour un accès aux ressources physiques est terminée, l'adresse de la dernière instruction du programme formant le dispositif d'interface 3 et ayant lancé ladite tâche est retournée dans le registre d'exécution du microprocesseur 10. Cela a pour effet d'initialiser une partie du programme, constituant le dispositif d'interface 3, qui forme le moyen de lecture 32.

Le moyen de lecture 32 dans le dispositif d'interface 3 lit les contenus respectifs des emplacements prédéterminés qui mémorisent les informations Y₁ à Y_{N} et forme le message REP(Y₁,..,Y_{N}). Ce message REP(Y₁,..,Y_{N}) est transmis au second moyen de traitement 2. Il est à noter que le moyen de lecture 32 n'est pas nécessaire à la mise en oeuvre d'une première variante de l'invention selon laquelle la tâche appelée ne retourne aucune information Y₁ à Y_{N} à destination du moyen de traitement client 2.

Ainsi la demande par le second moyen de traitement 2 d'un accès aux ressources physiques 1a, associées au premier moyen de traitement 1, est obtenue sans une modification du programme en langage source 11s par adjonction d'instructions additionnelles.

En pratique, il peut être supposé que la tâche exécutée pour un accès aux ressources physiques ne retourne aucune information Y₁ à Y_{N}. Dans ce cas, le moyen de lecture 32 n'est pas mis en oeuvre. Par ailleurs, le microprocesseur formant partie du dispositif d'interface 3 est typiquement celui du moyen de traitement serveur 1.

Dans la réalisation décrite ci-dessus, il est supposé que les premier et second moyens de traitement 1 et 2 sont physiquement distincts et associés à des circuits de traitements, ou microprocesseurs, dissociés. L'homme du métier conviendra que ces premier et second moyens de traitement 1 et 2 peuvent être confondus, par exemple dans le cas d'un environnement multitâche, auquel cas lesdits premier et second moyens de traitement 1 et 2 définissent des processus indépendants dont l'un d'eux, à savoir celui qui définit le premier moyen de traitement 1, gère les ressources physiques 1a. En outre, l'homme du métier appréciera dans la description qui précède que chaque adressage d'un emplacement-mémoire peut consister en un adressage indirect, auquel cas une adresse désignant un emplacement repère un emplacement intermédiaire mémorisant l'adresse dudit emplacement.

## Revendications

1. Procédé pour partager des ressources physiques (1a) entre un premier moyen de traitement (1) et un second moyen de traitement (2), lesdites ressources étant associées audit premier moyen de traitement (1), ledit procédé comprenant la transmission par ledit second moyen (2) de traitement d'un message (REQ(X₁,..,X_{M})) de demande d'accès auxdites ressources à destination du premier moyen de traitement (1), et ledit premier moyen de traitement (1) comprenant un circuit de traitement (10) associé à une mémoire de programme (100) et une mémoire de données (101),
**caractérisé en ce qu'**il comprend les étapes de :
- association à une valeur (00,01,10,11) prise par une première information (X₁) contenue dans un premier champ dudit message (REQ(X₁,..,X_{M})) de demande d'accès, d'une adresse associée respective désignant un emplacement donné dans la mémoire de programme (100) et identifiant le début d'une tâche parmi une pluralité de tâches destinées à accéder auxdites ressources physiques,
- écriture de valeurs respectives prises par ou associées à des secondes informations (X₂,..,X_{M}) qui sont contenues dans un second champ dudit message de demande d'accès, à des premiers emplacements prédéterminés dans la mémoire de données (101) associée audit premier moyen de traitement (1), lesdits premiers emplacements prédéterminés étant tels que la tâche accède à chacun desdits premiers emplacements prédéterminés lors de son exécution,
- chargement de ladite adresse associée dans un registre d'exécution dudit circuit de traitement (10) inclus dans le premier moyen de traitement, afin de déclencher ladite tâche,
lesdites étapes étant mises en oeuvre par un dispositif d'interface (3), et un programme utile au fonctionnement dudit dispositif d'interface étant dissocié de chacune de ladite pluralité de tâches.

2. Procédé conforme à la revendication 1, **caractérisé en outre par** l'étape de
- lecture par ledit dispositif d'interface (3) d'informations résultant de l'exécution de ladite tâche par ledit circuit de traitement (10) et mémorisées à des seconds emplacements prédéterminés dans ladite mémoire de données (101) associée audit premier moyen de traitement (1), pour former un message de réponse (REP(Y₁,..,Y_{N})) transmis à destination dudit second moyen de traitement (2),
ladite étape de lecture étant mise en oeuvre par le dispositif d'interface en réponse à la fin de l'exécution de ladite tâche.

3. Procédé conforme à la revendication 1 ou 2, **caractérisé en ce que** les premier et second moyens de traitement (1,2) sont tous deux associés à un même circuit de traitement (10).

4. Procédé conforme à l'une quelconque des revendications 1 à 3, **caractérisé en ce que** ledit dispositif d'interface (3) résulte de l'exécution dudit programme par ledit circuit de traitement (10) associé audit premier moyen de traitement (1).

5. Dispositif d'interface (3) comportant des moyens pour la mise en oeuvre des étapes du procédé conforme à la revendication 1, recevant ledit message de demande d'accès en provenance du second moyen de traitement (2) et coopérant avec ledit premier moyen de traitement (1), **caractérisé en ce qu'**il comprend :
- un moyen de table de correspondance (30) pour associer à chacune de valeurs pouvant être prise par ladite première information (X₁), l'une respective d'une pluralité d'adresses désignant des emplacements respectifs dans la mémoire de programme (100),
- un moyen (31) pour successivement adresser chacun desdits premiers emplacements prédéterminés dans la mémoire de données (101) et écrire en correspondance chacune desdites secondes valeurs respectives prises par les secondes informations contenues dans le second champ dudit message de demande d'accès.

6. Dispositif d'interface (3) selon la revendication 1, pour la mise en oeuvre du procédé conforme à la revendication 2, **caractérisé en ce qu'**il comprend, en outre,
- un moyen (32) pour lire dans ladite mémoire de données (101) lesdites informations résultant de l'exécution de ladite tâche par ledit circuit de traitement (10), et former le message de réponse (REP(Y₁,..,Y_{N})) qui est transmis audit second moyen de traitement (2).

## Claims

1. Method of sharing physical resources (1a) associated with a first processor (1) between said first processor (1) and a second processor (2), said method including sending of a message (REQ(X1 ... XM)) requesting access to said resources from said second processor (2) to said first processor (1), and said first processor (1) including a processor circuit (10) associated with a program memory (100) and a data memory (101),
**characterized in that** it comprises the steps of:
- associating with the value (00, 01, 10, 11) assumed by a first parameter (X) contained in a first field of said access request message (REQ(X1 ... XM)) a respective associated address designating a given location in the program memory (100) and identifying the start of one of a plurality of tasks which access said physical resources,
- writing respective values assumed by or associated with second parameters (X2 ... XM) contained in a second field of said access request message with predetermined first locations in the data memory (101) associated with said first processor (1), said predetermined first locations being such that the task accesses each of said first predetermined locations when it is executed, and
- loading said associated address into an execution register of said processor circuit (10) included in the first processor in order to initiate said task,
said steps being implemented by an interface device (3) and a program required for operation of said interface device being dissociated from each task of said plurality of tasks.

2. Method according to claim 1 further comprising the step of:
- reading by said interface device (3) of parameters resulting from execution of said task by said processor circuit (10) and memorized at predetermined second locations in said data memory (101) associated with said first processor (1) to form a response message (REP(Y1 ... YN)) sent to said second processor (2),
said reading step being implemented by the interface device in response to the end of execution of said task.

3. Method according to claim 1 or claim 2 **characterized in that** the first and second processors (1, 2) are both associated with the same processor circuit (10).

4. Method according to any of claims 1 to 3 **characterized in that** said interface device (3) is the result of execution of said program by said processor circuit (10) associated with said first processor (1).

5. Interface device (3) including means for implementing the steps of the method according to claim 1, adapted to receive said access request message from the second processor (2) and to cooperate with said first processor (1), **characterized in that** it comprises:
- correspondence table means (30) for associating with each value that said first parameter (X₁) can assume a respective one of a plurality of addresses designating respective locations in the program memory (100), and
- means (31) for successively addressing each of said predetermined first locations in the data memory (101) and writing in corresponding relation thereto each of said respective second values assumed by the second parameters contained in the second field of said access request message.

6. Interface device (3) according to claim 5 for implementing the method according to claim 2, **characterized in that** it further comprises:
- means (32) for reading in said data memory (101) said parameters resulting from execution of said task by said processor circuit (10) and for forming the response message (REP(Y1 ... YN)) sent to said second processor (2).

## Patentansprüche

1. Verfahren zum Aufteilen von physikalischen Ressourcen (1a) zwischen einem ersten Verarbeitungsmittel (1) und einem zweiten Verarbeitungsmittel (2), wobei die Ressourcen dem ersten Verarbeitungsmittel (1) zugeordnet sind, wobei das Verfahren die Übertragung einer Zugriffsanforderungsnachricht (REQ(X₁, ..., X_{M})) zum Zugriff auf die Ressourcen von dem zweiten Verarbeitungsmittel (2) an das erste Verarbeitungsmittel (1) umfasst und das erste Verarbeitungsmittel (1) eine Verarbeitungsschaltung (10) in Verbindung mit einem Programmspeicher (100) und einem Datenspeicher (101) umfasst, **gekennzeichnet durch** die Schritte:
- Zuordnen eines von einer in einem ersten Feld der Zugriffsanforderungsnachricht (REQ(X₁, ..., X_{M})) enthaltenen Information (X₁) angenommenen Werts (00, 01, 10, 11) zu einer Adresse, die jeweils eine gegebene Stelle in dem Programmspeicher (100) bezeichnet und den Beginn einer Aufgabe aus einer Mehrzahl von Aufgaben identifiziert, die zum Zugreifen auf die physikalischen Ressourcen dienen,
- Schreiben von Werten, die von in einem zweiten Feld der Zugriffsanforderungsnachricht enthaltenen zweiten Informationen (X₂, ..., X_{M}) angenommen werden oder diesen zugeordnet sind, an vorgegebene erste Stellen in dem dem ersten Verarbeitungsmittel (1) zugeordneten Datenspeicher (101), wobei die vorgegebenen ersten Stellen derart sind, dass die Aufgabe auf jede dieser vorgegebenen ersten Stellen bei ihrer Ausführung zugreift,
- Laden der zugeordneten Adresse in ein Ausführungsregister der in dem ersten Verarbeitungsmittel enthaltenen Verarbeitungsschaltung (10), um die Aufgabe in Gang zu setzen,
wobei die Schritte von einer Schnittstellenvorrichtung (3) ausgeführt werden, und ein für den Betrieb der Schnittstellenvorrichtung nützliches Programm von jeder der mehreren Aufgaben getrennt ist.

2. Verfahren nach Anspruch 1, ferner **gekennzeichnet durch** den Schritt
- Lesen, **durch** die Schnittstellenvorrichtung (3), von aus der Ausführung der Aufgabe **durch** die Verarbeitung (10) resultierenden und an zweiten vorgegebenen Stellen in dem dem ersten Verarbeitungsmittel (1) zugeordneten Datenspeicher (101) gespeicherten Informationen, um eine Antwortnachricht (REP(Y₁, ..., Y_{N})) zu bilden, die an das zweite Verarbeitungsmittel (2) übertragen wird,
wobei der Schritt des Lesens von der Schnittstellenvorrichtung als Reaktion auf das Ende der Ausführung der Aufgabe durchgeführt wird.

3. Verfahren nach Anspruch 1 oder 2, **dadurch gekennzeichnet, dass** die ersten und zweiten Verarbeitungsmittel (1, 2) einer gleichen Verarbeitungsschaltung (10) zugeordnet sind.

4. Verfahren nach einem beliebigen der Ansprüche 1 bis 3, **dadurch gekennzeichnet, dass** die Schnittstellenvorrichtung (3) aus der Ausführung des Programms durch die dem ersten Verarbeitungsmittel (1) zugeordnete Verarbeitungsschaltung (10) resultiert.

5. Schnittstellenvorrichtung (3) mit Mitteln zur Durchführung der Schritte des Verfahrens nach Anspruch 1, die die von dem zweiten Verarbeitungsmittel (2) kommende Zugriffsanforderungsnachricht empfängt und mit dem ersten Verarbeitungsmittel (1) zusammenwirkt, **dadurch gekennzeichnet, dass** sie umfasst:
- ein Korrespondenztabellenmittel (30) zum Zuordnen einer jeweiligen Adresse aus einer Mehrzahl von Adressen, die die jeweiligen Stellen im Programmspeicher (100) bezeichnen, zu jedem Wert, dem die ersten Information (X₁) annehmen kann,
- ein Mittel (31) zum sukzessiven Adressieren einer jeden der vorgegebenen ersten Stellen in dem Datenspeicher (101) und zum entsprechenden Schreiben jedes der von den im zweiten Feld der Zugriffsanforderungsnachricht enthaltenen zweiten Informationen angenommenen Werte.

6. Schnittstellenvorrichtung (3) nach Anspruch 1 für die Durchführung des Verfahrens nach Anspruch 2, **dadurch gekennzeichnet, dass** sie ferner umfasst:
- ein Mittel (32) zum Lesen der aus der Ausführung der Aufgabe durch die Verarbeitungsschaltung (10) resultierenden Informationen in dem Datenspeicher (101) und zum Bilden der Antwortnachricht (REP(Y₁, ..., Y_{N})), die an das zweite Verarbeitungsmittel (2) übertragen wird.
